# FASCICULE DE BREVET EUROPEEN

(11) **EP 2 553 900 B1**
(45) Date de publication et mention de la délivrance du brevet: **30.12.2020**
(21) Numéro de dépôt: 11719316.9
(22) Date de dépôt: 30.03.2011
(51) Int. Cl.: H04L 29/06

(54) **TRANSMISSION DE FLUX DE DONNÉES ADAPTABLE**
ADAPTIERBARE DATENSTROMÜBERTRAGUNG
ADAPTABLE DATA STREAM TRANSMISSION

(30) Priorité: 31.03.2010 FR 1052403
(43) Date de publication de la demande: 06.02.2013
(60) Demande divisionnaire: 20209367.0
(73) Titulaire: ORANGE, 75015 Paris (FR)
(72) Inventeur: ELLOUZE, Selim, F-22300 Lannion (FR); FROMENTOUX, Gaël, F-22560 Ile Grande (FR); MARJOU, Xavier, F-22300 Lannion (FR)
(86) Numéro de dépôt international: PCT/FR2011/050711
(87) Numéro de publication internationale: WO 2011/121237

(56) Documents cités:
- US-A1- 2007 087 781
- US-A1- 2009 254 657
- Ric Smith: "The Future of the Web: HTML5 Web Sockets", , 16 août 2008 (2008-08-16), 16 septembre 2008 (2008-09-16), pages 1-6, XP002610911, Extrait de l'Internet: URL:http://ricsmith.sys-con.com/node/67781 3 [extrait le 2010-11-24]
- HELLWAGNER H ET AL: "Interoperable Adaptive Multimedia Communication", IEEE MULTIMEDIA, IEEE SERVICE CENTER, NEW YORK, NY, US, vol. 12, no. 1, 1 janvier 2005 (2005-01-01), pages 74-79, XP011124605, ISSN: 1070-986X, DOI: DOI:10.1109/MMUL.2005.7
- Anonymous: "Session Description Protocol - Wikipedia", , 18 February 2010 (2010-02-18), XP055612330, Retrieved from the Internet: URL:https://en.wikipedia.org/w/index.php?t itle=Session_Description_Protocol&oldid=34 4748073 [retrieved on 2019-08-12]
- PANTOS R ET AL: "HTTP Live Streaming; draft-pantos-http-live-streaming-02.txt", HTTP LIVE STREAMING; DRAFT-PANTOS-HTTP-LIVE-STREAMING-02.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, no. 2, 5 October 2009 (2009-10-05), XP015064407, [retrieved on 2009-10-05]

## Description

Le domaine de l'invention est celui de la transmission de flux de données dans un réseau de télécommunications.

La présente invention concerne plus particulièrement la transmission de flux de données adaptable entre un serveur et un terminal entre lesquels une session répondant au protocole HTTP ou à un protocole basé HTTP est ouverte.

A titre d'exemple de flux de données adaptable, le « Scalable Video Coding » (SVC) est une technologie standardisée [Amendment 3 to ISO/IEC 14496 MPEG-4 Part 10] de compression de contenu vidéo utilisée pour faire une adaptation du contenu dans trois dimensions différentes : soit dans la dimension spatiale (différentes résolutions de la vidéo), soit temporelle (différentes fréquences) soit de qualité (différents SNR « Signal to Noise Ratio »). Le flux vidéo est composé de plusieurs sous-flux, appelés couches. Un exemple typique est la séparation d'un flux vidéo en 2 couches: une couche de base et une couche de rehaussement. Par exemple, quand la bande-passante entre le client et le serveur est restreinte, seul le sous-flux de base est envoyé au client. Quand la bande-passante entre le client et le serveur augmente, le sous-flux de rehaussement est rajouté au flux transmis au client. Il faut noter que la couche de base SVC est compatible MPEG4-AVC que la plupart des terminaux et serveurs actuels implémentent.

Le transport du contenu vidéo SVC est réalisé par le protocole RTP (Real-time Transport Protocol), en cours de normalisation à l'IETF *[draft-ietf-avt-rtp-svc-20].*

Or le protocole RTP n'est pas entièrement satisfaisant, notamment pour les raisons suivantes :
- le problème majeur est que le flux RTP ne peut pas passer les pare- feux (« firewalls ») qui bloquent le trafic sur tout autre port que le port web 80,
- le flux RTP doit généralement être transmis du serveur (zone publique) vers le client (zone privé), ce qui requiert un passage de NAT (Network Address Translation) extrêmement difficile,
- le protocole RTP n'est pas nativement intégré dans les navigateurs web et des modules additionnels sont nécessaires,
- il est difficile, en présence de NAT, au niveau du serveur de VOD (Video On Demand) de faire le lien entre les flux de contrôle (ex: SIP ou RTSP) et les flux RTP,
- les flux vidéo SVC transportés par RTP nécessitent d'être synchronisés avec les flux audio transportés dans une autre session RTP.

C'est pourquoi d'autres protocoles sont envisagés, tels que le protocole HTTP (HyperText Transfer Protocol) ou le protocole WSP (Web Socket Protocol), qui est basé sur HTTP, tout en y apportant des améliorations.

L'utilisation de HTTP comme protocole de transport présente plusieurs avantages car ce protocole résout un certain nombre de problèmes. D'un côté, le port 80 associé aux données HTTP n'est pas bloqué par les équipements intermédiaires (proxy, firewall,...) ce qui n'est pas le cas des ports associés à d'autres protocoles. Deuxièmement, le protocole HTTP est un protocole ouvert et les serveurs HTTP sont largement déployés ce qui offre un parc déjà existant et prêt à l'exploitation. Troisièmement, le protocole HTTP est un protocole de transfert de données et donc peut être exploité pour multiplexer différentes sortes de données comme le « chat », les votes en ligne, les jeux interactifs questions/réponses, etc., ce qui enrichit les sessions multimédia classiques et offre un large éventail pour des applications innovantes.

Le protocole WSP est une évolution du protocole HTTP qui peut exploiter la même session de transport que ce dernier: port classique 80 ou port sécurisé 443. Le protocole WSP permet en plus d'avoir une voie de communication à deux sens entre deux extrémités sans avoir recours à l'ouverture de plusieurs sessions HTTP. Les données peuvent être transmises en mode « Push » ce qui est très intéressant pour les flux à contraintes de délai.

Ainsi, des techniques de « streaming » adaptatif sur HTTP ont été développées pour offrir une meilleure qualité d'expérience (QoE) aux utilisateurs en offrant des possibilités d'adaptation en cours de session. Il s'agit de basculer entre les flux disponibles côté serveur, exclusivement en fonction de la bande passante.

Il s'agit de solutions propriétaires. Par exemple, on utilise un serveur web classique et un client à télécharger ou bien implémenté par défaut sur le terminal client. Côté serveur, le flux audiovisuel est découpé en des segments contenant chacun une certaine durée de temps du flux (par exemple 10s). Il faut noter que la découpe des fichiers en morceaux (chunks) n'est pas standardisée et que chacun des promoteurs de cette technique a utilisé une solution qui lui est propre. Le réassemblage des segments côté client restitue le flux décodable. Le serveur crée un nouveau lien pour chaque segment et le stocke dans un fichier d'indexation. Le client télécharge ce fichier quand il demande le flux et ensuite commence à télécharger les segments depuis les liens qu'il trouve dans le fichier. Ce fichier d'indexation est formaté suivant des modèles définis par chaque firme. Ce fichier contient d'autres informations sur les segments et le flux. Le fichier d'indexation doit être téléchargé périodiquement pour connaître les liens vers les nouveaux segments. En fonction des informations reçues et de son estimation de la bande passante, le client décide des segments à télécharger.

Les techniques connues de streaming adaptatif sur HTTP présentent un certain nombre d'inconvénients. On peut citer par exemple :
- Durée d'attente initiale : Les fichiers d'indexation doivent contenir trois segments ou plus avant d'être disponibles pour le téléchargement. Pour des contenus « live », il faut attendre l'encodage et l'indexation d'au moins trois segments ce qui rend la durée d'attente initiale entre l'instant de demande du flux et l'instant de lecture importante. En « live streaming » et avec une taille de segment égale à 10s, elle peut atteindre 30 secondes.
- Les fichiers index sont générateurs de problèmes. Il faut télécharger un fichier index et le mettre à jour périodiquement. Ce fichier contient les liens vers les segments du fichier media et des informations sur les segments, leur structuration et les données qu'ils transportent. Cette méthode présente 3 inconvénients majeurs :
   - Les requêtes/réponses périodiques entre le serveur et les clients gaspillent de la bande passante et constituent une charge supplémentaire pour les serveurs.
   - Le fichier d'indexation nécessite un service fiable car la non-réception ou la présence d'erreur peut engendrer des coupures.
   - Les mécanismes de cache dans les passerelles web peuvent empêcher la mise à jour du dernier fichier d'indexation créé par le serveur et la transmission du dernier fichier sauvegardé dans le cache de la passerelle.
- Les flux sont statiques et de format prédéterminé : Les différentes représentations du flux proposent des débits différents mais sont prédéterminées. Les clients doivent choisir dans ce qui existe et ne peuvent pas prétendre à une adaptation personnalisée. En parallèle, la découpe du flux en segments de taille égale ne permet pas de respecter les limites des paquets et des images Intra-codées. Ces images constituent le point de basculement entre des représentations différentes d'un même contenu. Cette découpe minimise donc le nombre éventuel de point de basculement entre les différentes représentations.
- L'adaptation est rudimentaire : Les techniques proposées supportent uniquement le basculement entre des représentations de qualité différentes mais pas de caractéristiques différentes comme la résolution spatiale ou la fréquence temporelle.
- Le serveur est passif : La décision pour basculer vers un flux plus adapté est prise uniquement côté client. Le serveur n'est pas capable d'intervenir.

Par ailleurs, la demande de brevet US 2009/0254657 décrit une architecture de transmission utilisant un débit adaptatif impliquant un terminal et un gestionnaire de débit adaptatif. Dans cette architecture, ce gestionnaire de débit adaptatif détermine dans un premier temps un débit de données optimal pour transmettre les données vers le terminal, au moyen d'un contrôleur de débit adaptatif, puis répartit ce débit optimal entre flux vidéo et flux audio au moyen d'un répartiteur de débit avant d'encoder des flux de données audio et/ou vidéo selon cette répartition et de transmettre ces flux vers le terminal 102. Le contrôleur de débit adaptatif calcule ce débit optimal de transmission à partir de l'estimation de paramètres relatifs seulement à l'état du réseau, tels que le MTT, le débit de données reçu par le terminal, une estimation du temps d'aller-retour ou un décompte des pertes de paquets lors de la transmission dans ce réseau. La demande de brevet US 2007/087781 A1 décrit une passerelle de transcodage.

La présente invention a pour but de résoudre les inconvénients de la technique antérieure.

A cette fin, l'invention propose un procédé selon la revendication 1.

Grâce à l'invention, les informations de contexte transmises au premier terminal permettent de réaliser une adaptation optimisée pour chaque client utilisateur du second terminal et pour chaque événement affectant la session. Par exemple, un client changeant de taille d'écran en cours de visualisation recevra instantanément un flux de résolution spatiale adaptée à la nouvelle taille d'écran.

L'invention n'utilise pas de fichier d'indexation ce qui permet une économie de bande passante et une meilleure fiabilité.

La durée d'attente initiale avant le début de la lecture dépend uniquement de la durée d'établissement de la session de transport. Il n'y a pas besoin d'attendre l'encodage de trois segments entiers pour pouvoir transmettre un fichier d'indexation au client comme c'est le cas pour les autres techniques. Le premier paquet est transmis vers le second terminal en début de session et permet la visualisation instantanée par le client en attendant la réception du contexte initial du client et l'adaptation du flux en fonction de ce contexte.

Selon une caractéristique préférée, les étapes de collecte, formation, adaptation et transmission sont effectuées à l'initialisation de la session et en cours de session. Ainsi, la transmission du flux adaptable est optimisée non seulement en fonction du contexte défini à l'initialisation de la session, mais également en fonction des évolutions possibles du contexte.

Selon une caractéristique préférée, l'étape de collecte comporte la réception d'un message de signalisation transmis par le second terminal. Ainsi le contexte spécifique au second terminal est pris en compte pour optimiser la transmission du flux adaptable.

L'invention concerne aussi un procédé selon la revendication 4.

Cet équipement de télécommunications est par exemple un serveur. L'invention concerne encore un équipement de télécommunications selon la revendication 7.

Cet équipement de télécommunications est par exemple un terminal client.

Ces différents équipements présentent des avantages analogues à ceux des procédés précédemment présentés.

Dans un mode particulier de réalisation, les différentes étapes des procédés selon l'invention sont déterminées par des instructions de programmes d'ordinateurs.

En conséquence, l'invention vise aussi un programme d'ordinateur sur un support d'informations, ce programme étant susceptible d'être mis en oeuvre dans un ordinateur, ce programme comportant des instructions adaptées à la mise en oeuvre des étapes d'un procédé tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions des programmes d'ordinateur tels que mentionnés ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

D'autres caractéristiques et avantages apparaîtront à la lecture de modes de réalisation préférés décrits en référence aux figures dans lesquelles :
- la figure 1 représente un mode de réalisation de dispositifs selon l'invention,

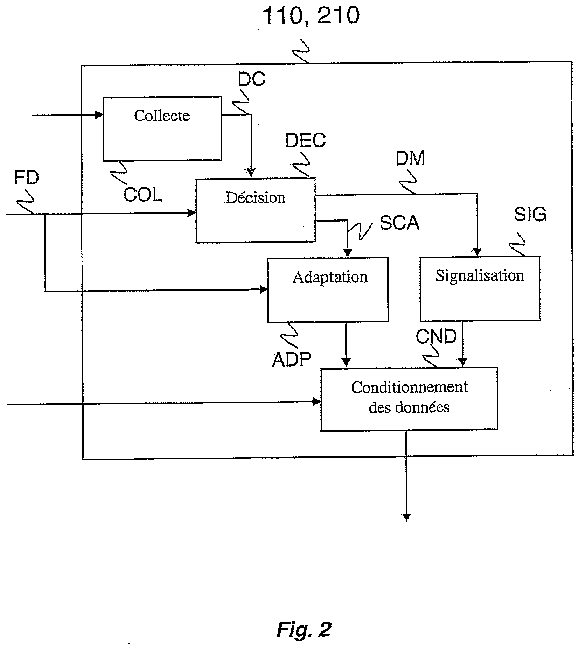

- la figure 2 représente un mode de réalisation de module d'adaptation selon l'invention,
- la figure 3 représente un exemple de diagramme d'échanges entre un serveur et un terminal client selon l'invention,
- la figure 4 représente un mode de réalisation de dispositif selon l'invention, et
- la figure 5 représente un mode de réalisation de dispositif selon l'invention.

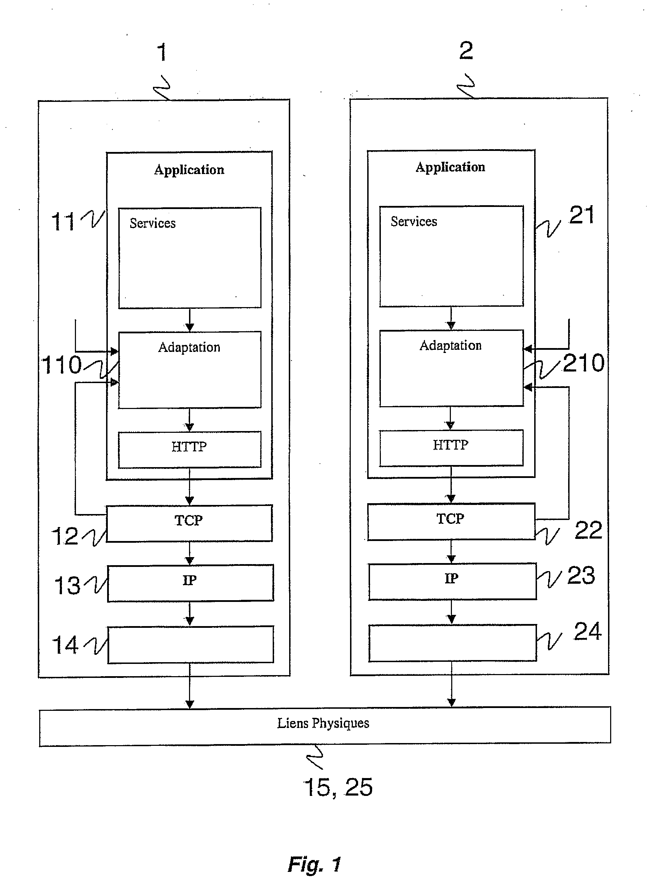

Selon un mode de réalisation de l'invention représenté à la **figure 1**, les équipements implémentant l'invention sont un premier terminal qui est un serveur 1 et un second terminal qui est un terminal client 2. Le serveur 1 et le terminal client 2 comportent des moyens classiques pour communiquer en utilisant le protocole HTTP ou selon un protocole basé HTTP tel que le protocole HTTPS (« Secured ») ou le protocole WSP (Web Socket Protocol) ou encore le protocole WSP tunnelisé sur TLS.

On décrit brièvement l'architecture en couches du serveur 1 et du terminal 2, en commençant par la couche supérieure. La couche application 11, 21 comporte une partie application proprement dite et utilise le protocole HTTP. Le protocole TCP (Transmission Control Protocol) est utilisé au niveau de la couche transport 12, 22. Le protocole IP (Internet Protocol) est utilisé au niveau de la couche réseau 13, 23. La couche liaison de données 14, 24 spécifie notamment le tramage des paquets de données. Enfin la couche physique 15, 25 concerne les caractéristiques physiques de la liaison.

De manière classique, la liaison entre le serveur et le terminal utilise des équipements intermédiaires d'un réseau de télécommunications, tels que passerelle, serveur proxy, qui ne seront pas décrits ici. On considère uniquement le serveur 1 et le terminal client 2 qui sont les équipements d'extrémité de la liaison.

On considère plus particulièrement le cas où le serveur est apte à transmettre un flux multimédia adaptable au terminal.

Un flux multimédia adaptable est par exemple un flux de type SVC (Scalable Video Coding).

Selon l'invention, un module d'adaptation 110, 210 est ajouté au niveau de la couche application du serveur et du terminal client.

Dans le cas où l'invention est implémentée entre deux terminaux communiquant selon un mode pair à pair, il y a établissement d'une session WSP qui est par nature bidirectionnelle ou de deux sessions HTTP distinctes, pour transporter les flux de données dans les deux sens.

En référence à la ligure 2, le module d'adaptation selon l'invention, que ce soit le module d'adaptation 110 du serveur 1 ou le module d'adaptation 210 du terminal 2, comporte un ensemble de sous-modules ou fonctions.

### Fonction de collecte des informations et des événements utiles

La fonction de collecte COL est capable de s'interfacer avec :
- différentes entités du terminal pour déterminer ses caractéristiques matérielles et ses capacités (cartes réseaux, processeurs graphiques, CPU, mémoire, batterie, changement d'écran (mobile as a STB), commandes applicatives utilisateur (ex: commandes magnétoscope avance/retour lent/rapide, pause"...),
- l'utilisateur pour déterminer ses droits, l'authentifier ou connaître ses préférences,
- la session de transport pour déterminer l'état actuel du lien (bande passante, délai, jigue,..).

L'ensemble de ces informations définit le contexte. Un contexte est un ensemble d'informations qui caractérise l'environnement d'une entité. Pour une session de streaming, le contexte est l'ensemble des informations liées à cette session. Il s'agit des deux extrémités (les capacités matérielles du serveur et du client), du lien entre les deux (nature bande passante,...), de l'utilisateur (crédit, préférences, historique...).

Ce contexte est dynamique car plusieurs informations peuvent varier au cours du temps. C'est pourquoi le contexte est défini à l'initialisation de la session puis est réactualisé en cours de session pour suivre les évolutions des différentes composantes du contexte,

L'ensemble des informations de contexte est agrégé dans un descripteur de contexte DC.

Le descripteur de contexte DC comporte trois sections :
- Contexte global : contient des informations générales sur la session (Live, VoD, contenu protégé, pays autorisé,...)
- Contexte spécifique au serveur : décrit les informations relatives au serveur (adresse, propriétaire, état, types de flux supportés, mécanismes d'authentification,...)
- Contexte spécifique au client : Les informations sur l'environnement du client (caractéristiques matérielles, capacités de décodage CPU-mémoire-Buffer, Batterie, résolution d'affichage du processeur graphique, interface réseau, préférences client,...).

La collecte d'informations de contexte est réalisée aussi bien côté terminal client que côté serveur. Comme on le verra dans la suite, le descripteur de contexte généré à une extrémité est mis en forme et transmis à l'autre extrémité, de sorte que ces informations de contexte soient traitées par la fonction de collecte de l'autre extrémité.

### Fonction de décision

La fonction de décision DEC reçoit le flux de données adaptable FD et le descripteur de contexte DC. La fonction de décision analyse les informations collectées, puis définit au cas par cas un schéma d'adaptation optimisé SCA qui est exploité par la fonction d'adaptation décrite dans la suite. On distingue le fonctionnement de la fonction de décision côté serveur et côté terminal.

### 1. Côté serveur :

Les principaux traitements réalisés par la fonction de décision sont :
o Analyse de la structure du flux adaptable. Pour pouvoir effectuer une adaptation optimale, il faut pouvoir prendre en compte toutes les possibilités d'adaptation disponibles et connaître toutes les caractéristiques du flux. Le module d'adaptation a besoin de savoir exactement :
- La structure du flux (l'ensemble de couches qui forment le flux et les relations de dépendances qui existent entre elles)
- Les caractéristiques des couches qui forment le flux (résolution spatiale (QCIF, HD,...) qualité, importance de chaque couche,...)
- Les adaptations non-intuitives (par exemple transcodage de plusieurs couches SVC en une couche compatible MPEG-4) supportées par le flux. Ces adaptations peuvent être déduites d'une analyse approfondie du flux et dans certaines normes d'encodage elles sont signalées dans des messages particuliers.

L'ensemble de ces informations sera sauvegardé dans la structure descripteur de média DM et plus précisément dans les trois sections qu'il définit : « Media content structure », « media content characteristics » et « media content adaptability ». Cette structure peut être transmise :
- au client pour lui permettre d'effectuer des adaptations additionnelles s'il le souhaite.
- aux équipements intermédiaires « Media Aware Network Equipment (MANE) » capables d'effectuer des adaptations en cœur ou périphérie de réseau.
   ∘ Traitement des informations collectées par la fonction de collecte (charge du serveur, état des liens sortants,...) et des informations sur le contexte envoyées par le client afin de déterminer un schéma d'adaptation SCA le plus en phase avec son contexte.
   o Définition du schéma d'adaptation optimal (ensemble des actions à réaliser afin de modifier le flux de départ en un flux optimal pour le contexte actuel de la session avec le client).

Détermination des informations pertinentes à transmettre à la fonction de Signalisation pour être envoyées au client.

### 2. Côté client :

Les principaux traitements réalisés par la fonction de décision sont :
∘ Traitement des informations collectées par la fonction de collecte (état du client, préférences de l'utilisateur,...) et des informations sur le contexte envoyées par le serveur afin d'effectuer une adaptation additionnelle si nécessaire.

Détermination des informations pertinentes sur le contexte à transmettre à la fonction de signalisation pour être envoyées au serveur.

La fonction de décision DEC transmet le descripteur de contexte DC et le descripteur de média DM à la fonction de terminaison de signalisation décrite plus loin. Elle transmet également le schéma d'adaptation SCA à la fonction d'adaptation.

### Fonction d'adaptation du contenu audiovisuel

La fonction d'adaptation ADP reçoit le flux adaptable FD et le schéma d'adaptation SCA établi par la fonction de décision. Elle réalise l'adaptation proprement dite du contenu du flux adaptable, en fonction du schéma d'adaptation, afin de restituer un flux adapté en sortie.

### Fonction de terminaison de signalisation

La fonction de terminaison de signalisation SIG assure la communication entre les équipements participant à la session.

Côté serveur, cette fonction reçoit le descripteur de contexte DC et le descripteur de média DM et les met en forme en vue de leur transmission vers le terminal client. Cette transmission est réalisée au début de la session et en cours de session au fil de l'eau.

Côté terminal client, cette fonction reçoit le descripteur de contexte DC et le met en forme en vue de sa transmission vers le serveur. Cette transmission est réalisée au début de la session et en cours de session au fil de l'eau.

Pour la transmission en temps réel du contexte on peut utiliser un protocole de description des « Capabilities & Current Context Protocol » (CCCP) ou en variante un fichier XML.

### Fonction de conditionnement des données

Dans le cas du protocole WSP, l'établissement de la session Web Socket permet de multiplexer plusieurs sessions de données. La fonction de conditionnement des données CND permet notamment de distinguer dans le flux global de données les différents types en utilisant des champs au format TLV (Type, Longueur, Valeur).

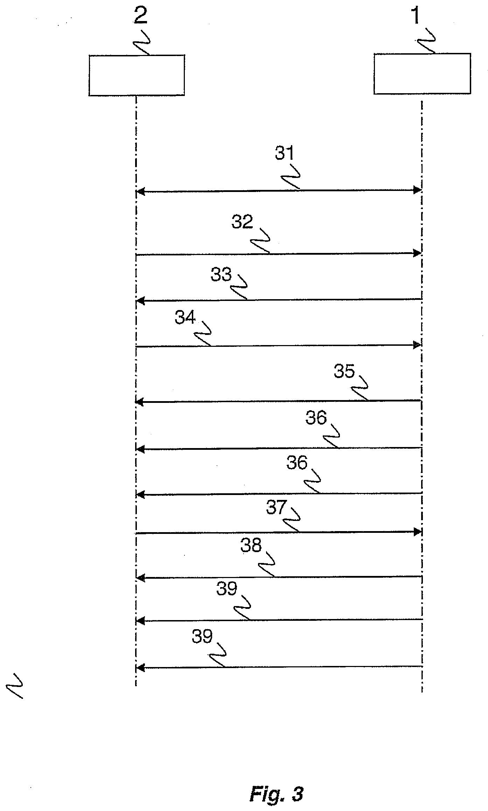

La figure 3 représente un diagramme des échanges entre le serveur 1 et le terminal client 2 lors d'une session au cours de laquelle un flux de données adaptable est transmis selon l'invention.

L'échange 31 est l'établissement de la session, selon le protocole HTTP ou un protocole basé HTTP. On suppose que c'est le protocole WSP qui est utilisé. Cet établissement de session est classique.

Le terminal envoie une requête 32 de demande d'un flux multimédia adaptable au serveur.

Le serveur envoie 33 la couche de base SVC au terminal.

Le terminal collecte les informations de contexte et les transmet 34 au serveur, selon le protocole CCCP.

Le serveur collecte les informations de contexte et les transmet 35 au terminal, selon le protocole CCCP. La collecte effectuée par chacun des équipements comporte notamment la réception éventuelle des informations de contexte de l'autre équipement et leur prise en compte.

Il est à noter que si le terminal ne transmet pas d'information de contexte, par exemple parce qu'il ne possède pas le module adéquat, le serveur est néanmoins capable d'effectuer une adaptation du flux en fonction des informations de contexte qu'il aura collectées.

Le serveur forme un schéma d'adaptation, adapte le flux en fonction des informations de contexte et transmet 36 le flux adapté au terminal. Le flux adapté comporte par exemple la couche de base et une couche de rehaussement du flux SCV. En outre, le serveur transmet au terminal un descripteur de média.

Le terminal forme un schéma d'adaptation, effectue des adaptations additionnelles sur le flux reçu en fonction des informations de contexte puis restitue le flux adapté à l'utilisateur.

Le terminal collecte à nouveau les informations de contexte et transmet 37 au serveur ces informations de contexte, qui par exemple intègrent un changement d'un paramètre par rapport à la transmission 34, selon le protocole CCCP.

De même, le serveur collecte à nouveau les informations de contexte et transmet 38 au terminal ces informations de contexte. Comme précédemment, la collecte effectuée par chacun des équipements comporte notamment la réception éventuelle des informations de contexte de l'autre équipement et leur prise en compte.

Le serveur forme à nouveau un schéma d'adaptation, réadapte le flux en fonction des informations de contexte et transmet 39 le flux adapté au terminal.

Comme précédemment, le terminal forme un schéma d'adaptation, effectue des adaptations additionnelles sur le flux reçu en fonction des informations de contexte puis restitue le flux adapté à l'utilisateur.

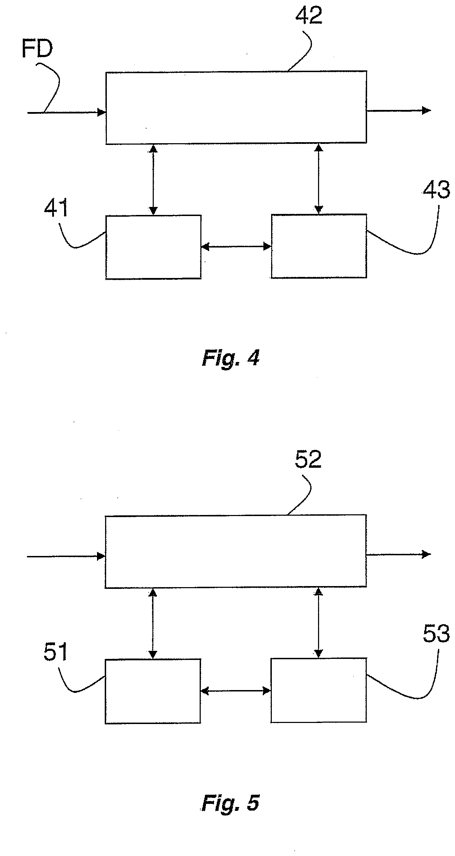

La figure **4** représente un premier équipement, tel qu'un serveur 1 selon l'invention. Ce serveur met en œuvre le procédé de transmission de flux adaptable selon le mode de réalisation particulier décrit ci-dessus.

Un tel dispositif comprend notamment une mémoire 41 constituée d'une mémoire tampon, une unité de traitement 42, équipée par exemple d'un microprocesseur, et pilotée par le programme d'ordinateur 43, mettant en œuvre le procédé selon l'invention.

A l'initialisation, les instructions de code du programme d'ordinateur 43 sont par exemple chargées dans une mémoire RAM avant d'être exécutées par le processeur de l'unité de traitement 42. L'unité de traitement 42 reçoit en entrée un flux de données adaptable FD à traiter. Le microprocesseur de l'unité de traitement 42 met en œuvre les étapes du procédé décrit précédemment, selon les instructions du programme d'ordinateur 43.

Pour cela, l'équipement est capable de communiquer avec un autre équipement, dit second terminal, par le biais d'une session établie selon un protocole de transport basé HTTP, et il comporte :
- des moyens de collecte d'un ensemble d'informations de contexte relatives à la session, à l'équipement et au second terminal,
- des moyens de formation d'un schéma d'adaptation en fonction de l'ensemble d'informations de contexte,
- des moyens d'adaptation du flux de données en fonction du schéma d'adaptation,
- des moyens de transmission du flux de données adapté vers le second terminal.

Ces moyens sont pilotés par le microprocesseur de l'unité de traitement 42.

La **figure 5** représente un second équipement, tel qu'un terminal client 2 selon l'invention. Ce terminal met en œuvre le procédé de réception de flux adaptable selon le mode de réalisation particulier décrit ci-dessus.

Un tel dispositif comprend notamment une mémoire 51 constituée d'une mémoire tampon, une unité de traitement 52, équipée par exemple d'un microprocesseur, et pilotée par le programme d'ordinateur 53, mettant en œuvre le procédé selon l'invention.

A l'initialisation, les instructions de code du programme d'ordinateur 53 sont par exemple chargées dans une mémoire RAM avant d'être exécutées par le processeur de l'unité de traitement 52. L'unité de traitement 52 reçoit en entrée un flux de données adapté à traiter. Le microprocesseur de l'unité de traitement 52 met en œuvre les étapes du procédé décrit précédemment, selon les instructions du programme d'ordinateur 53.

Pour cela, l'équipement est capable de communiquer avec un autre équipement, dit premier terminal, par le biais d'une session établie selon un protocole de transport basé HTTP, et il comporte :
- des moyens de collecte d'un ensemble d'informations de contexte relatives à la session, au premier terminal et à l'équipement,
- des moyens de réception du flux de données,
- des moyens de formation d'un schéma d'adaptation en fonction de l'ensemble d'informations de contexte,
- des moyens d'adaptation du flux de données en fonction du schéma d'adaptation.

Ces moyens sont pilotés par le microprocesseur de l'unité de traitement 52.

## Revendications

1. Procédé de transmission de flux de données préalablement codé selon un codage adaptable entre un premier terminal (1) et un second terminal (2) par le biais d'une session établie selon un protocole de transport basé HTTP, comportant les étapes de :
- collecte par le premier terminal d'un ensemble d'informations de contexte comprenant des informations relatives à la session, des informations relatives au premier terminal et des informations relatives au second terminal,
- formation d'un schéma d'adaptation (SCA) en fonction de l'ensemble d'informations de contexte,
- adaptation du flux de données par le premier terminal en fonction du schéma d'adaptation,
- transmission du flux de données adapté par le premier terminal vers le second terminal.

2. Procédé selon la revendication 1, **caractérisé en ce que** les étapes de collecte, formation, adaptation et transmission sont effectuées à l'initialisation de la session et en cours de session.

3. Procédé selon la revendication 1 ou 2, **caractérisé en ce que** l'étape de collecte comporte la réception d'un message de signalisation transmis par le second terminal.

4. Procédé de réception de flux de données préalablement codé selon un codage adaptable entre un premier terminal (1) et un second terminal (2) par le biais d'une session établie selon un protocole de transport basé HTTP, ledit second terminal étant un terminal client, comportant les étapes de :
- collecte par le second terminal d'un ensemble d'informations de contexte comprenant des informations relatives à la session, des informations relatives au premier terminal et des informations relatives au second terminal,
- formation d'un schéma d'adaptation (SCA) en fonction de l'ensemble d'informations de contexte,
- réception du flux de données par le second terminal,
- adaptation du flux de données par le second terminal en fonction des du schéma d'adaptation, et
- restitution du flux adapté à un utilisateur du second terminal.

5. Procédé de réception selon la revendication 4, **caractérisé en ce que** l'étape de collecte comporte la réception d'un message de signalisation transmis par le premier terminal.

6. Equipement de télécommunications capable de transmettre un flux de données préalablement codé selon un codage adaptable vers un second terminal par le biais d'une session établie selon un protocole de transport basé HTTP, comportant
- des moyens de collecte (COL) d'un ensemble d'informations de contexte comprenant des informations relatives à la session, des informations relatives à l'équipement et des informations relatives au second terminal,
- des moyens de formation (DEC) d'un schéma d'adaptation (SCA) en fonction de l'ensemble d'informations de contexte,
- des moyens d'adaptation (ADP) du flux de données en fonction du schéma d'adaptation,
- des moyens de transmission du flux de données adapté vers le second terminal.

7. Equipement de télécommunications capable de recevoir un flux de données préalablement codé selon un codage adaptable depuis un premier terminal par le biais d'une session établie selon un protocole de transport basé HTTP, ledit équipement de télécommunications étant un terminal client comportant
- des moyens de collecte (COL) d'un ensemble d'informations de contexte comprenant des informations relatives à la session, des informations relatives au premier terminal et des informations relatives à l'équipement,
- des moyens de réception du flux de données,
- des moyens (DEC) de formation d'un schéma d'adaptation (SCA) en fonction de l'ensemble d'informations de contexte,
- des moyens d'adaptation (ADP) du flux de données en fonction du schéma d'adaptation, et
- des moyens de restitution, à un utilisateur dudit équipement de télécommunications, d'un flux de données adapté, délivré par lesdits moyens d'adaptation.

8. Programme d'ordinateur comportant des instructions pour l'exécution des étapes du procédé selon l'une quelconque des revendications 1 à 3 lorsque ledit programme est exécuté par un ordinateur.

9. Support d'enregistrement lisible par un ordinateur sur lequel est enregistré un programme d'ordinateur comprenant des instructions pour l'exécution des étapes du procédé selon l'une quelconque des revendications 1 à 3.

10. Programme d'ordinateur comportant des instructions pour l'exécution des étapes du procédé selon l'une quelconque des revendications 4 à 5 lorsque ledit programme est exécuté par un ordinateur.

11. Support d'enregistrement lisible par un ordinateur sur lequel est enregistré un programme d'ordinateur comprenant des instructions pour l'exécution des étapes du procédé selon l'une quelconque des revendications 4 à 5.

12. Système de télécommunications comprenant un équipement de télécommunications selon la revendication 6 et au moins un équipement de télécommunications selon la revendication 7.

## Patentansprüche

1. Verfahren zur Übertragung eines Datenstroms, der zuvor gemäß einer adaptierbaren Codierung codiert wurde, zwischen einem ersten Endgerät (1) und einem zweiten Endgerät (2) mittels einer Sitzung, die gemäß einem HTTP-basierten Transportprotokoll hergestellt wurde, umfassend die folgenden Schritte:
- Sammeln, durch das erste Endgerät, eines Satzes Kontextinformationen, der Informationen über die Sitzung, Informationen über das erste Endgerät und Informationen über das zweite Endgerät beinhaltet,
- Bilden eines Adaptierungsschemas (SCA) in Abhängigkeit von dem Satz Kontextinformationen,
- Adaptieren des Datenstroms durch das erste Endgerät in Abhängigkeit von dem Adaptierungsschema,
- Übertragen des adaptierten Datenstroms durch das erste Endgerät an das zweite Endgerät.

2. Verfahren nach Anspruch 1, **dadurch gekennzeichnet, dass** die Schritte des Sammelns, des Bildens, des Adaptierens und des Übertragens bei Initialisierung der Sitzung und während der Sitzung vorgenommen werden.

3. Verfahren nach Anspruch 1 oder 2, **dadurch gekennzeichnet, dass** der Schritt des Sammelns das Empfangen einer durch das zweite Endgerät übertragenen Signalisierungsnachricht umfasst.

4. Verfahren zum Empfang eines Datenstroms, der zuvor gemäß einer adaptierbaren Codierung codiert wurde, zwischen einem ersten Endgerät (1) und einem zweiten Endgerät (2) mittels einer Sitzung, die gemäß einem HTTP-basierten Transportprotokoll hergestellt wurde, wobei das zweite Endgerät ein Client-Endgerät ist, umfassend die folgenden Schritte:
- Sammeln, durch das zweite Endgerät, eines Satzes Kontextinformationen, der Informationen über die Sitzung, Informationen über das erste Endgerät und Informationen über das zweite Endgerät beinhaltet,
- Bilden eines Adaptierungsschemas (SCA) in Abhängigkeit von dem Satz Kontextinformationen,
- Empfangen des Datenstroms durch das zweite Endgerät,
- Adaptieren des Datenstroms durch das zweite Endgerät in Abhängigkeit von dem Adaptierungsschema und
- Wiederherstellen des adaptierten Stroms für einen Benutzer des zweiten Endgeräts.

5. Empfangsverfahren nach Anspruch 4, **dadurch gekennzeichnet, dass** der Schritt des Sammelns das Empfangen einer durch das erste Endgerät übertragenen Signalisierungsnachricht umfasst.

6. Telekommunikationsausrüstung, die fähig ist, einen Datenstrom, der zuvor gemäß einer adaptierbaren Codierung codiert wurde, mittels einer Sitzung, die gemäß einem HTTP-basierten Transportprotokoll hergestellt wurde, an ein zweites Endgerät zu übertragen, umfassend:
- Mittel zum Sammeln (COL) eines Satzes Kontextinformationen, der Informationen über die Sitzung, Informationen über die Ausrüstung und Informationen über das zweite Endgerät beinhaltet,
- Mittel zum Bilden (DEC) eines Adaptierungsschemas (SCA) in Abhängigkeit von dem Satz Kontextinformationen,
- Mittel zum Adaptieren (ADP) des Datenstroms in Abhängigkeit von dem Adaptierungsschema,
- Mittel zum Übertragen des adaptierten Datenstroms an das zweite Endgerät.

7. Telekommunikationsausrüstung, die fähig ist, einen Datenstrom, der zuvor gemäß einer adaptierbaren Codierung codiert wurde, mittels einer Sitzung, die gemäß einem HTTP-basierten Transportprotokoll hergestellt wurde, von einem ersten Endgerät zu empfangen, wobei die Telekommunikationsausrüstung ein Client-Endgerät ist, umfassend:
- Mittel zum Sammeln (COL) eines Satzes Kontextinformationen, der Informationen über die Sitzung, Informationen über das erste Endgerät und Informationen über die Ausrüstung beinhaltet,
- Mittel zum Empfangen des Datenstroms,
- Mittel (DEC) zum Bilden eines Adaptierungsschemas (SCA) in Abhängigkeit von dem Satz Kontextinformationen,
- Mittel zum Adaptieren (ADP) des Datenstroms in Abhängigkeit von dem Adaptierungsschema und
- Mittel zum Wiederherstellen, für einen Benutzer der Telekommunikationsausrüstung, eines adaptierten Datenstroms, der durch die Adaptierungsmittel bereitgestellt wird.

8. Computerprogramm, das Anweisungen zum Ausführen der Schritte des Verfahrens nach einem der Ansprüche 1 bis 3 umfasst, wenn das Programm durch einen Computer ausgeführt wird.

9. Computerlesbares Aufzeichnungsmedium, auf dem ein Computerprogramm aufgezeichnet ist, das Anweisungen zum Ausführen der Schritte des Verfahrens nach einem der Ansprüche 1 bis 3 beinhaltet.

10. Computerprogramm, das Anweisungen zum Ausführen der Schritte des Verfahrens nach einem der Ansprüche 4 bis 5 umfasst, wenn das Programm durch einen Computer ausgeführt wird.

11. Computerlesbares Aufzeichnungsmedium, auf dem ein Computerprogramm aufgezeichnet ist, das Anweisungen zum Ausführen der Schritte des Verfahrens nach einem der Ansprüche 4 bis 5 beinhaltet.

12. Telekommunikationssystem, das eine Telekommunikationsausrüstung nach Anspruch 6 und mindestens eine Telekommunikationsausrüstung nach Anspruch 7 beinhaltet.

## Claims

1. Method of transmitting a data stream previously coded according to an adaptable coding between a first terminal (1) and a second terminal (2) by way of a session established according to an HTTP-based transport protocol, comprising the steps of:
- collection by the first terminal of a set of context information comprising information relating to the session, information relating to the first terminal and information relating to the second terminal,
- formation of an adaptation scheme (SCA) as a function of the set of context information,
- adaptation of the data stream by the first terminal as a function of the adaptation scheme,
- transmission of the data stream adapted by the first terminal to the second terminal.

2. Method according to Claim 1, **characterized in that** the steps of collection, formation, adaptation and transmission are performed upon initialization of the session and during the session.

3. Method according to Claim 1 or 2, **characterized in that** the collection step comprises the reception of a signalling message transmitted by the second terminal.

4. Method of receiving a data stream previously coded according to an adaptable coding between a first terminal (1) and a second terminal (2) by way of a session established according to an HTTP-based transport protocol, said second terminal being a client terminal, comprising the steps of:
- collection by the second terminal of a set of context information comprising information relating to the session, information relating to the first terminal and information relating to the second terminal,
- formation of an adaptation scheme (SCA) as a function of the set of context information,
- reception of the data stream by the second terminal,
- adaptation of the data stream by the second terminal as a function of the adaptation scheme, and
- rendering of the stream adapted to a user of the second terminal.

5. Reception method according to Claim 4, **characterized in that** the collection step comprises the reception of a signalling message transmitted by the first terminal.

6. Telecommunications equipment capable of transmitting a data stream previously coded according to an adaptable coding to a second terminal by way of a session established according to an HTTP-based transport protocol, comprising:
- means for collecting (COL) a set of context information comprising information relating to the session, information relating to the equipment item and information relating to the second terminal,
- means for forming (DEC) an adaptation scheme (SCA) as a function of the set of context information,
- means for adapting (ADP) the data stream as a function of the adaptation scheme,
- means for transmitting the adapted data stream to the second terminal.

7. Telecommunications equipment capable of receiving a data stream previously coded according to an adaptable coding from a first terminal by way of a session established according to an HTTP-based transport protocol, said telecommunications equipment being a client terminal, comprising:
- means for collecting (COL) a set of context information comprising information relating to the session, information relating to the first terminal and information relating to the equipment,
- means for receiving the data stream,
- means (DEC) for forming an adaptation scheme (SCA) as a function of the set of context information,
- means for adapting (ADP) the data stream as a function of the adaptation scheme, and
- means for rendering, to a user of said telecommunications equipment, an adapted data stream, delivered by said adaptation means.

8. Computer program comprising instructions for the execution of the steps of the method according to any one of Claims 1 to 3 when said program is executed by a computer.

9. Recording medium readable by a computer on which is recorded a computer program comprising instructions for the execution of the steps of the method according to any one of Claims 1 to 3.

10. Computer program comprising instructions for the execution of the steps of the method according to either one of Claims 4 and 5 when said program is executed by a computer.

11. Recording medium readable by a computer on which is recorded a computer program comprising instructions for the execution of the steps of the method according to either one of Claims 4 and 5.

12. Telecommunications system comprising a telecommunications equipment according to Claim 6 and at least one telecommunications equipment according to Claim 7.
